# EUROPEAN PATENT APPLICATION

(11) **EP 3 335 665 A2**
(43) Date of publication of application: **20.06.2018**
(21) Application number: 17206999.9
(22) Date of filing: 13.12.2017
(51) Int. Cl.: A61C 7/08, A61C 7/36

(54) **COUPLING INTERFACE FOR USE WITH AT LEAST ONE PAIR OF ORTHODONTIC ALIGNERS, RETAINERS OR POSITIONERS**

(30) Priority: 13.12.2016 EP 16203780
(71) Applicant: Ortho Caps GmbH, 59069 Hamm (DE); RMO Europe, 67400 Illkirch-Graffenstaden (FR); ORTHOGEM Development, 63000 Clermont Ferrand (FR)
(72) Inventor: Khan, Wajeeh, 59069 Hamm (DE)
(74) Representative: Michalski Hüttermann & Partner Patentanwälte mbB

(57) **Abstract**

The present invention relates to a coupling interface suitable for use with at least one pair of orthodontic aligners, retainers or positioners, comprising one upper jaw aligner, retainer or positioner and one lower jaw aligner, retainer or positioner, said pair of aligners, retainers or positioners comprising a polymeric material and tooth receiving cavities to accommodate teeth arranged in the said upper and lower jaws. The appliance comprises a set of at least two hinge units, each hinge unit comprising two joints each of which being engaged with one of the two aligners, retainers or positioners, the two joints further being pivotally connected to the distally opposing sections of a tube or shaft, wherein at least one of the joints is detachably engaged with the respective aligner, retainer or positioner

## Description

### Field of the invention

The present invention relates to the field of Orthodontic appliances.

### Background

In order to treat overbites, i.e., help the lower jaw develop in a forward direction, orthodontic appliances which comprise a coupling interface that pivotable connect the upper and lower jaw of a patient, hence exerting forces on the lower jaw pushing the latter forward.

Such devices are known, for example, as "Herbst appliance", and are fixed to a patient's canines, premolars and/or molars. They include a metal tube that connects the upper and lower jaw be means of respective joints, hence forming a hinge mechanism. By adjusting the length of the tube, an orthodontist is able to control the lower jaw's position in relation to the upper jaw.

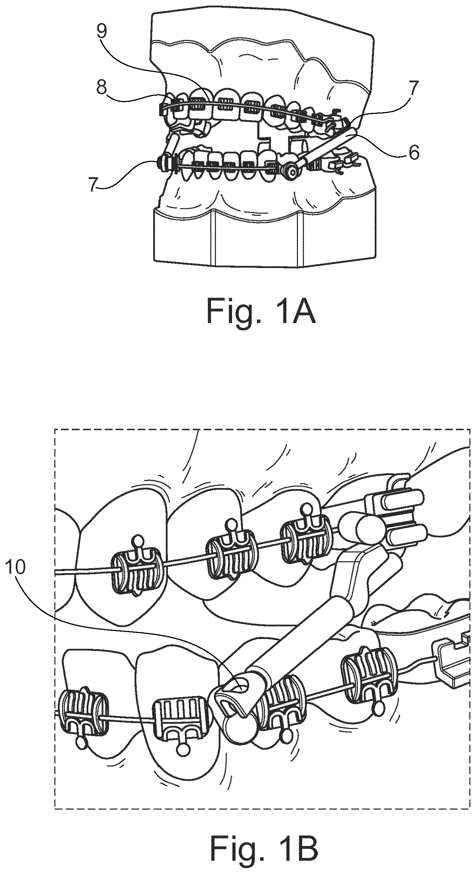

A conventional Herbst appliance is not removable, as it is usually fixed to braces (either to the archwire or a bracket thereof) attached to the patient's teeth. See Fig. 1A for such conventional Herbst appliance, showing the tube, the two joints and how they are mounted to a patient's braces.

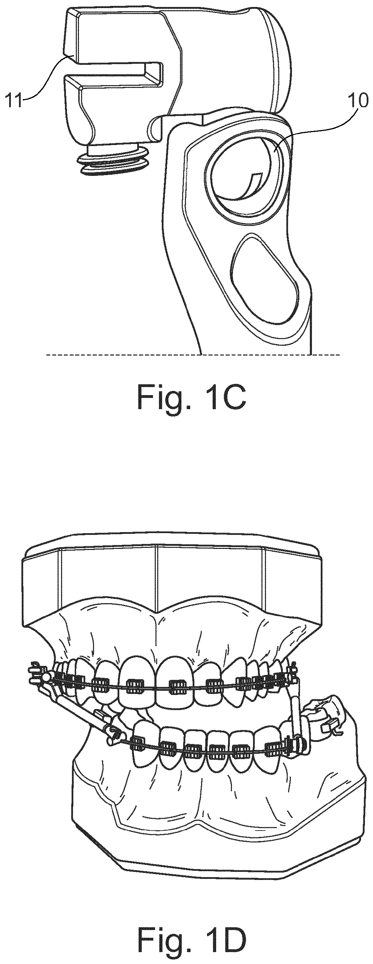

An advancement of the conventional Herbst appliance is the "Liberty Bielle" appliance as manufactured by Rocky Mountain Orthodontics. This appliance has 360° range of motion for maximum lateral movement, and hence allows a more comfortable wearing for the patient. Instead of the conventional joints, the Liberty Bielle uses ball joints, as can be seen in Figs 1B and 1C, to provide for a greater degree of lateral excursion of the lower jaw, hence allowing extra sideways latitude, as shown in Fig 1D.

As seen in Figs 1A - D, Herbst appliances are usually mounted to a patient's braces via slits in the joints. Such joints can also be embedded into retainer type devices, which are then drawn over the canines, premolars or molars of a patient, when dental braces are either not desired or needed. Such embodiment is shown in Fig. IF. In this case, however, a correction of a patient's tooth configuration, to account for an malocclusion, is not possible at the same time.

In recent years, incremental aligners have become a popular alternative to dental braces for correcting tooth configurations. These aligners resemble the well known retainers. The idea is to use a set of these devices to incrementally move teeth from a malocclusion into a clinically or aesthetically desirable position.

The conventional brace therapy can be conveniently combined with a Herbst appliance, as the joints of the appliance are simply affixed to the archwire or brackets that form part of the brace.

However, said joints cannot simply be affixed to an aligner, as the latter has no such archwire. Embedding these joints into the aligners is not possible either, however, because in the course of an aligner therapy, 10 or more incremental aligners are frequently prescribed. Embedding of the joints would mean that the entire Herbst appliance would have to be discarded together with the respective aligner, once the next incremental aligner would be used.

There is hence the need to provide a coupling interface which can conveniently be used with aligner therapies. There is further the need to provide a coupling interface which can be combined with aligner therapy at moderate costs.

### Summary of the invention

These and further objects are met with methods and means according to the independent claims of the present invention. The dependent claims are related to specific embodiments.

### Embodiments of the invention

Before the invention is described in detail, it is to be understood that this invention is not limited to the particular component parts or structural features of the devices or compositions described or process steps of the methods described as such devices and methods may vary. It is also to be understood that the terminology used herein is for purposes of describing particular embodiments only, and is not intended to be limiting. The mere fact that certain measures are recited in mutually different dependent claims does not indicate that a combination of these measures cannot be used to advantage. Any reference signs in the claims should not be construed as limiting the scope. It must be noted that, as used in the specification and the appended claims, the singular forms "a," "an" and "the" include singular and/or plural referents unless the context clearly dictates otherwise. Further, in the claims, the word "comprising" does not exclude other elements or steps. The mere fact that certain measures are recited in mutually different dependent claims does not indicate that a combination of these measures cannot be used to advantage.

It is moreover to be understood that, in case parameter ranges are given which are delimited by numeric values, the ranges are deemed to include these limitation values.

It is further to be understood that embodiments disclosed herein are not meant to be understood as individual embodiments which would not relate to one another. Features discussed with one embodiment are meant to be disclosed also in connection with other embodiments shown herein. If, in one case, a specific feature is not disclosed with one embodiment, but with another, the skilled person would understand that does not necessarily mean that said feature is not meant to be disclosed with said other embodiment. The skilled person would understand that it is the gist of this application to disclose said feature also for the other embodiment, but that just for purposes of clarity and to keep the specification in a manageable volume this has not been done.

Furthermore, the content of the prior art documents referred to herein is incorporated by reference. This refers, particularly, for prior art documents that disclose standard or routine methods. In that case, the incorporation by reference has mainly the purpose to provide sufficient enabling disclosure, and avoid lengthy repetitions.

According to one embodiment of the invention, a coupling interface suitable for use with at least one pair of orthodontic aligners, retainers or positioners, comprising one upper jaw aligner, retainer or positioner, and one lower jaw aligner, retainer or positioner is provided. Said pair of aligners, retainers or positioners comprises a polymeric material and tooth receiving cavities to accommodate teeth arranged in the said upper and lower jaws.
Said coupling interface comprises a set of at least two hinge units, each hinge unit comprising two joints, retainers or positioners, the two joints further being pivotally connected to the distally opposing sections of a tube or shaft. At least one of the joints is detachably engaged with the respective aligner, retainer or positioner.

In such way, the coupling interface can be easily removed, and hence be used with a large number of different orthodontic aligners, retainers or positioner, e.g., when these are being used consecutively by a patient. The coupling interface can hence easily be reused.
In one embodiment, the tube or shaft comprises two tubes arranged concentrically to one another, hence forming a telescopic connection the length of which can be adjusted, and fixed, according to the required adjustment of the overbite to be treated.

In one embodiment, at least one of the joints comprises
a) a base unit which is pivotally connected to the tube or shaft, which base unit is arranged at the outer surface of the buccal side of one cavity of the respective aligner, retainer or positioner, which cavity is designed to receive a canine, premolar or molar of the respective jaw, which base unity comprises a bore hole or internal thread (23), and
b) a fixing device arranged at the inner surface of the buccal side of said cavity of the respective aligner, retainer or positioner, said fixing device having an elongated shaft that interacts with the bore hole or internal thread of the base unit.

Preferably, said fixing device can be a screw, splint or bolt that engages with the base unit wither via the thread (in case the fixing device is a screw) or in an elsehow conventional manner. Preferably, the coupling interface is a Herbst appliance.

According to one embodiment of said coupling interfacse, at least one base unit is pivotally connected to the tube or shaft by means of a ball joint (10).

Said ball joint allows for a greater degree of lateral excursion of the lower jaw, hence allowing extra sideways latitude. This adaptation, which is known from the "Liberty Bielle" appliance as described above hence increases comfort of wearing and patient compliance.

According to another aspect of the invention, an orthodontic aligner, retainer or positioner for being arranged on teeth of a jaw is provided, which comprises cavities which are designed to receive teeth of said jaw. Said aligner, retainer or positioner comprises, on the buccal side of at least one cavity designed to receive a canine, premolar or molar of the respective jaw, a bore hole suitable to let through a fixing device having an elongated shaft.

This aligner, retainer or positioner is hence arranged for the base unit as described above to be removably attached thereto.

In one embodiment, the aligner, retainer or positioner further comprises a tilted pedestal structure which defines a surface that is inclined with respect to the surrounding outer surface of the buccal side of the aligner, retainer or positioner.

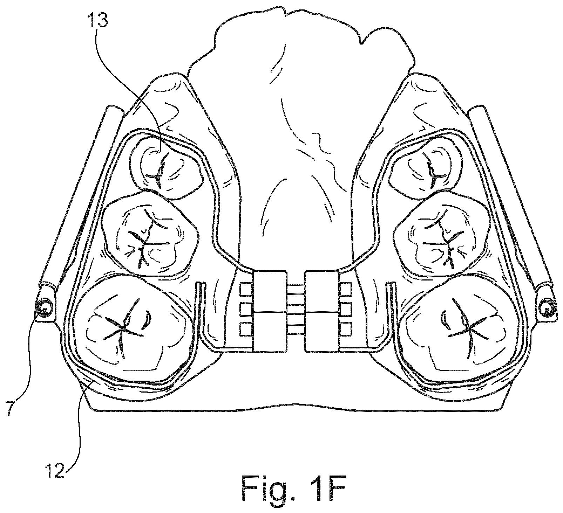

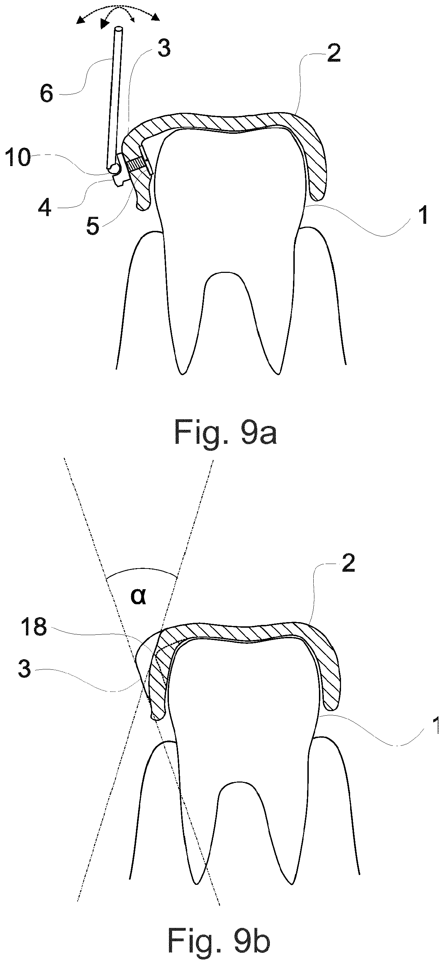

In such way, a maximum freedom of movement of the shaft or tube is guaranteed, in order to allow extra sideways latitude and increase patient comfort and compliance. This is because the shaft or tube extends to either in an upward/backward direction (if seen from the lower jaw) or into an downward/forward direction (if seen from the upper jaw), in order for the entire appliance to exert forces on the lower jaw pushing the latter forward. See Fig. 1 for these directional indications. The tilted pedestal structure allows the upward/backward// downward/forward directed shaft or tube to avoid immediate contact with the surface of the teeth or the aligner, retainer or position when the patient moves his lower jaw laterally. See the arrows in Fig. 1D and Fig. 9A.

In an alternative embodiment, no such tilted pedestal structures on the aligner, retainer or positioner are being provided. Instead, the base unit defines an angle that sets its outer surface apart from the surrounding outer surface of the buccal side of the aligner.

According to another embodiment, the aligner, retainer or positioner comprises a polymeric material, preferably a transparent material.

In one embodiment, such material is the Tru-Tain DX Aligner/Retainer material available from Tru-Tain Plastics, Rochester, or the Biocryl splint material, available from Biostar, Great Lakes Orthodontics, NY. However, the skilled person is aware of other materials available that can be used to make the orthodontic aligners, retainers or positioners.

According to yet another aspect of the invention, a pair of orthodontic aligners, retainers or positioners as disclosed above is provided, comprising one upper jaw aligner, retainer or positioner, and one lower jaw aligner, retainer or positioner. The bore hole and/or the tilted pedestal structure of the lower jaw aligner, retainer or positioner is arranged at the buccal side of a cavity which is designed to receive a canine or premolarm and the bore hole and/or tilted pedestal structure of the upper jaw aligner, retainer or positioner is arranged at the buccal side of a cavity which is designed to receive a premolar or molar.

According to this arrangement, the tube or shaft connecting the two base units is directed upwards/backwards (when seem from the lower jaw) or downwards/forward (when seen from then upper jaw). See Fig. 1A for a visualization of these directions. In such way, the appliance can exert forces on the lower jaw pushing the latter forward.

According to another aspect of the invention, a set of orthodontic aligners is provided, which set consists of at least
- a first aligner according to the above description, or a pair of aligners according to the above description, having a geometry selected to reposition the teeth of a patient's jaw from a first tooth arrangement to a second tooth arrangement, and
- a second aligner according to the above description, or a pair of aligners according to the above description, having a geometry selected to reposition the teeth of said patient's jaw from the second tooth arrangement to a third tooth arrangement,
- and, optionally, further aligners according to the above description, or a pair of aligners according to the above description, having a geometry selected to reposition the teeth of said patient's jaw from the third tooth arrangement to fourth and even further tooth arrangements.

In another embodiment, a kit comprising at least
a) two coupling interfaces according to the above description, and
b) (i) a pair of orthodontic aligners, retainers or positioners according to the above description, or (ii) a set of aligners according to the above description.

According to another aspect of the invention, the use of a Kit according to the above description is provided for the treatment of a patient suffering from an overbite and a malocclusion.

According to another aspect of the invention, a setup suitable for producing an orthodontic aligner, retainer or positioner according to the above description is provided, which setup comprises a positive model of at least a section of a dentition, comprising the model of a jaw with tooth models therein, said setup further having at least one tilted pedestal structure on a model of a canine, premolar and/or molar, which tilted pedestal structure defines a surface that is inclined with respect to the surrounding outer surface of the buccal side of the setup.

Said setup can either consist, essentially of a cured material, like gypsum, or a gypsum like material, being obtained by casting the non-cured material into a mold representing, essentially, a negative model of at least a section of a patient's dentition. Said dentition can either represent the patient's actual tooth arrangement, or a modified tooth arrangement.

Said mold has cavities where, in the setup, the tilted pedestal structures are to be placed.

Said setup can likewise be produced by using a rapid prototyping technique, meaning that a digital model of said setup having the tilted pedestal structures is printed out, or milled out of a material, by means of a suitable manufacturing technique. These rapid prototyping techniques are also called Computer aided manufacturing techniques, and are, as such, well known to the skilled person, Some popular examples include, *inter alia*, 3D printing, CNC milling, stereolithography or laser sintering.

In case of a pair of orthodontic aligners, retainers or positioners two such setups are being provided, one representing a positive model of at least a section of the upper jaw dentition and the other one representing a positive model of at least a section of the lower jaw dentition.

In case of a set consisting of at least a first aligner having a geometry selected to reposition the teeth of a patient's jaw from a first tooth arrangement to a second tooth arrangement, and a second aligner having a geometry selected to reposition the teeth of said patient's jaw from the second tooth arrangement to a third tooth arrangement, two or more such setups are being provided, one of which representing a positive model of said second tooth arrangement, and the other one representing a positive model of said third tooth arrangement.

According to another aspect of the invention, the use of a setup according to the above description is provided for the manufacture of an aligner, retainer or positioner according to the above description.

For this purpose, a conventional pressure or vacuum molding machine may be used to produce the appliances from a sheet of a suitable material, such as the Tru-Tain DX Aligner/Retainer material available from Tru-Tain Plastics, Rochester, or the Biocryl splint material, available from Biostar, Great Lakes Orthodontics, NY. However, the skilled person is aware of other materials available that can be used to make the orthodontic aligners, retainers or positioners.

Suitable pressure molding equipment is available under the tradename BIOSTAR from Great Lakes Orthodontics, Ltd., Tonawanda, New York 14150. The molding machine produces each of the appliances directly from the positive tooth model and the desired material. Suitable vacuum molding machines are available from Raintree Essix, Inc.

Respective methods for producing aligners, retainers or positioners are well known to the skilled person, and for example disclosed in McNamara, Orthodontic and Orthopedic Treatment in the Mixed Dentition, Chapter 19, Needham Press 1993.

### Experiments and Figures

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art in practicing the claimed invention, from a study of the drawings, the disclosure, and the appended claims. Any reference signs should not be construed as limiting the scope.
Figs. 1A shows a conventional Herbst appliance comprising a pair of coupling interfaces, each of which comprises two joints 7 and a shaft 6 comprising two tubes arranged concentrically to one another, hence forming a telescopic connection the length of which can be adjusted, and fixed, according to the required adjustment of the overbite to be treated. The joints are fixed to braces comprising an archwire 9 and brackets 8. This connection is not easily detachable. This embodiment allows simultaneous correction of an overbite and a malocclusion.
Figs. 1B - D show a known advancement of the conventional Herbst appliance comprising ball joints 10, which provide for a greater degree of lateral excursion of the lower jaw, hence allowing extra sideways latitude (see the arrow in Fig. 1D). Such device is sold under the brand name "Liberty Bielle", manufactured by Rocky Mountain Orthodontics.
Fig. IF shows another known advancement of the conventional Herbst appliance, comprising joints 7 which are embedded in a retainer type device 13 by means of specific embedding wires 12. The retainer is then drawn over the canines, premolars or molars of a patient, when dental braces are either not desired or needed. In this case, a correction of a patient's tooth configuration, to account for an malocclusion, is not possible at the same time.

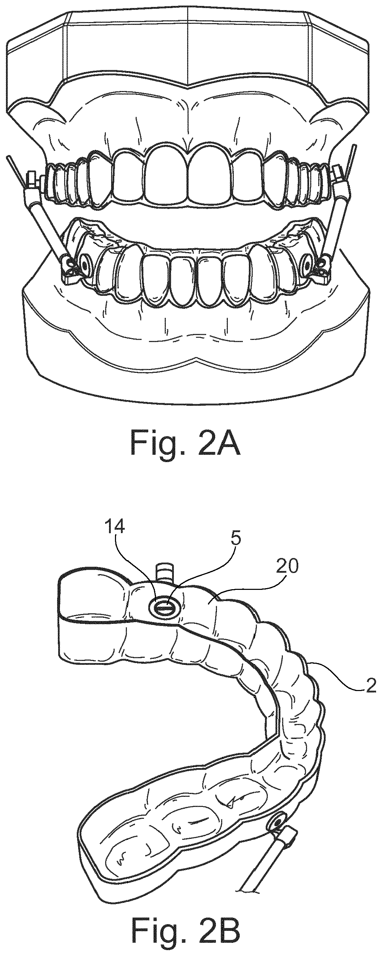

Figs. 2A and 2B show a coupling interface according to the invention. Fig 2A shows such interface embodied similar to a Herbst appliance, while Fig 2B shows a detailed view of an aligner, retainer or positioner 2 to which a base unit 4 is detachably attached by means of a screw 5 embedded into the inner surface 20 of the buccal side of the aligner, retainer or positioner 2, via a washer 14.

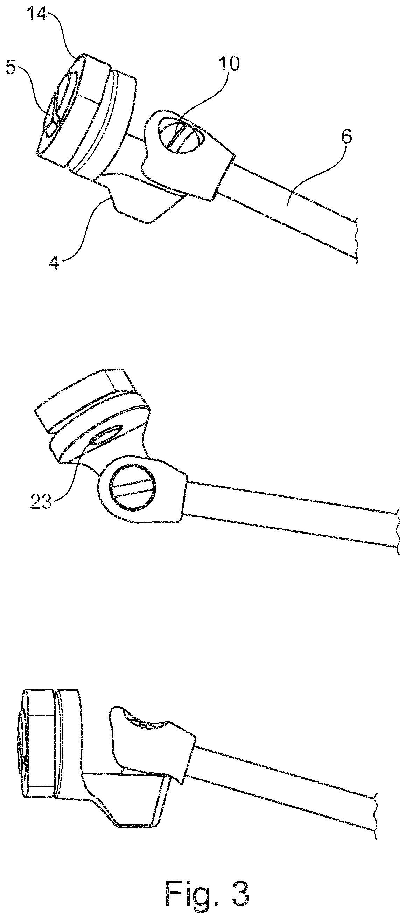

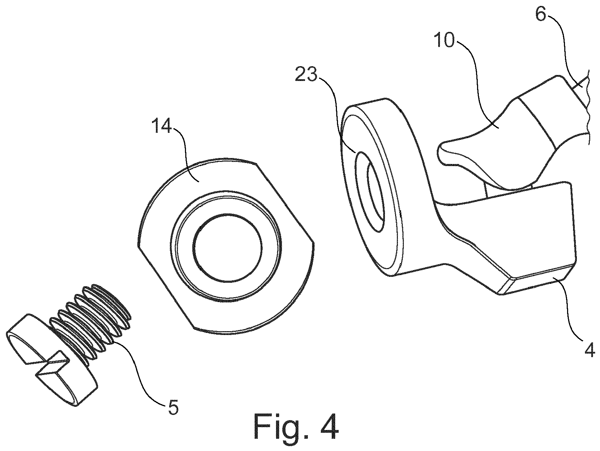

Fig. 3 shows details of the base unit 4, with the screw 5, washer 14, ball joint 10, shaft 6 and internal thread 23. Fig. 4 shows further details thereof.

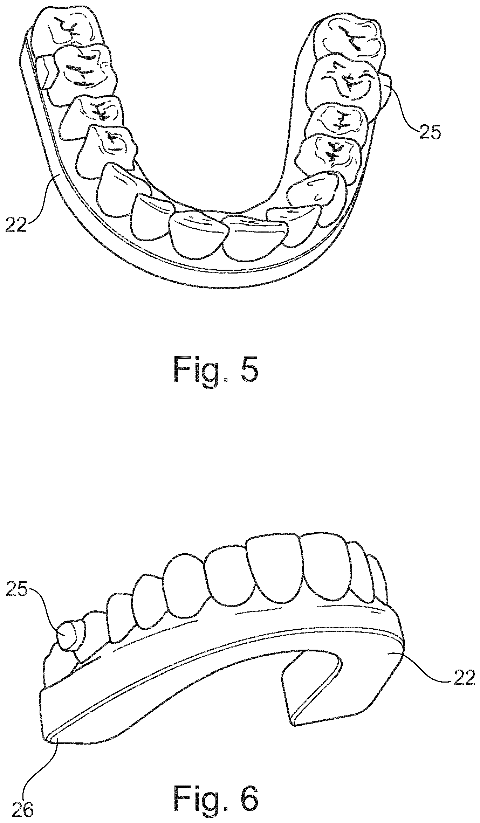

Figs. 5 and 6 shows a setup 22 suitable for producing an orthodontic aligner, retainer or positioner according to the invention. The setup comprises a positive model of a dentition, comprising the model of a jaw with tooth models therein, and has a tilted pedestal structure 25 on a model of a molar. The tilted pedestal structure defines a surface that is inclined with respect to the surrounding outer surface 26 of the buccal side of the setup.
   Said setup has been produced by using a rapid prototyping technique, meaning that a digital model of said setup having the tilted pedestal structures is printed out, or milled out of a material, by means of a suitable manufacturing technique. These rapid prototyping techniques are also called Computer aided manufacturing techniques, and are, as such, well known to the skilled person, Some popular examples include, *inter alia*, 3D printing, CNC milling, stereolithography or laser sintering.
   Said setup can likewise consist, essentially of a cured material, like gypsum, or a gypsum like material, being obtained by casting the non-cured material into a mold representing, essentially, a negative model of at least a section of a patient's dentition. Said dentition can either represent the patient's actual tooth arrangement, or a modified tooth arrangement.

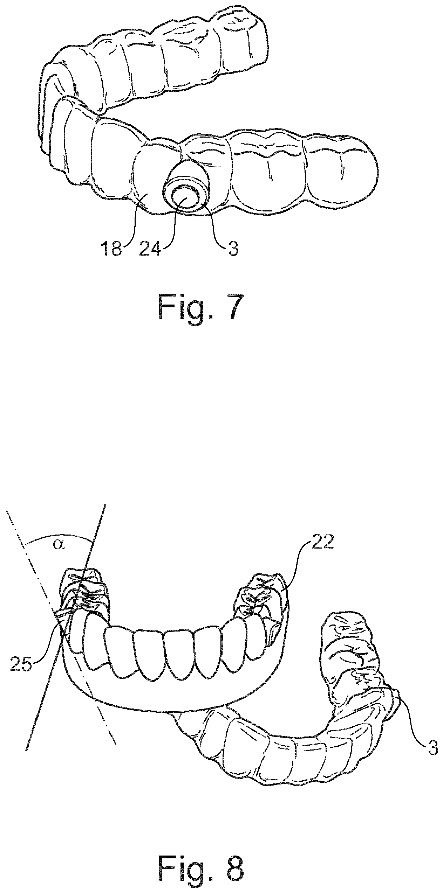

Figs. 7 and 8 show details of an aligner, retainer or positioner with a tilted pedestal structure 3 thereon, which defines a surface that is inclined with respect to the surrounding outer surface 18 of the buccal side of the aligner, retainer or positioner, and a bore hole 24 suitable to let through a fixing device having an elongated shaft. The inclination of the tilted pedestal structure can be seen in Fig. 8 by the dotted lines, wherein α determines the angle between the surface defined by the tilted pedestal structure 3 and the surrounding outer surface 18 of the buccal side of the aligner, retainer or positioner.
Fig. 9A and 9B show a cross section of an aligner, retainer or positioner 2, with a base unit 4 attached thereto by means of a screw 4. The base unit is attached to a tilted pedestal structure 3 on the aligner. The base unit 4 further comprises a ball joint 10 and a tube 6. Said tube 6 can be concentrically arranged to another tube, hence forming a telescopic device which connects to another joint that is arranged on a complimentary aligner, retainer or positioner not shown. The ball joint provides provide for a greater degree of freedom of movement of the tube 6, as shown by the arrows, and hence provide for a greater degree of lateral excursion of the lower jaw, when the entire set of upper jaw aligner, retainer or positioner and lower jaw aligner, retainer or positioner is worn by a patient.
   The tilted pedestal structure allows the upward/backward (when seem from the lower jaw) or downward/forward (when seen from then upper jaw) directed shaft or tube to avoid immediate contact with the surface of the teeth or the aligner, retainer or position, when the patient moves his lower jaw laterally.
   In such way, a maximum freedom of movement of the shaft or tube is guaranteed, in order to allow extra sideways latitude and increase patient comfort and compliance. This is because the shaft or tube extends to either in an upward/backward direction (if seen from the lower jaw) or into an downward/forward direction (if seen from the upper jaw), in order for the entire appliance to exert forces on the lower jaw pushing the latter forward. See Fig. 1 for these directional indications.
   The dotted lines in Fig. 9B indicate the angle α between the surface defined by the tilted pedestal structure 3 and the surrounding outer surface 18 of the buccal side of the aligner, retainer or positioner.

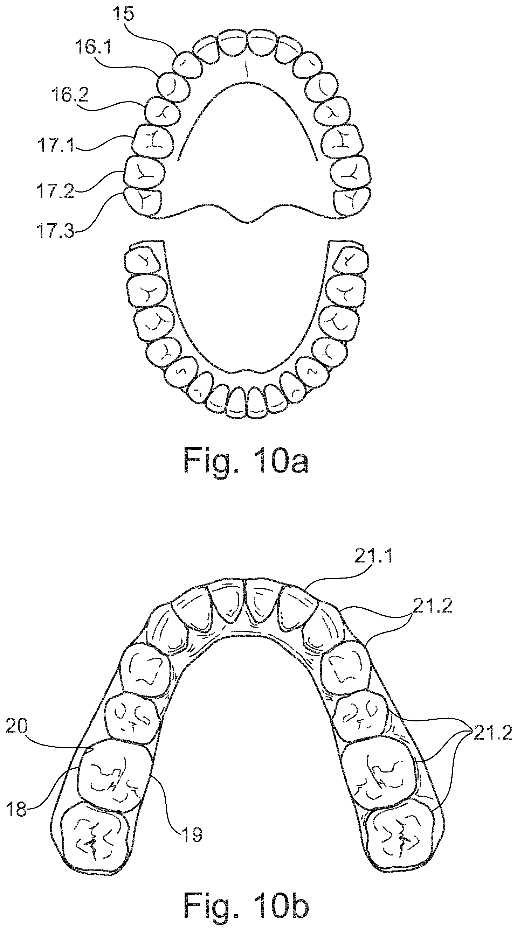

Fig. 10a shows a human dentition (either upper or lower jaw) with canine 15, premolars 16.1 and 16.2 and molars 17.1, 17.2 and 17.3. Fig. 10b shows an aligner, retainer or positioner with a cavity 21.1 to receive the canine, cavities 21.2 to receive the premolars and cavities 21.3 to receive the molars. Fig. 10b further shows the outer surface 18 of the buccal side, the palatinal side 19 and the inner surface 20 of the buccal side of the aligner, retainer or positioner.

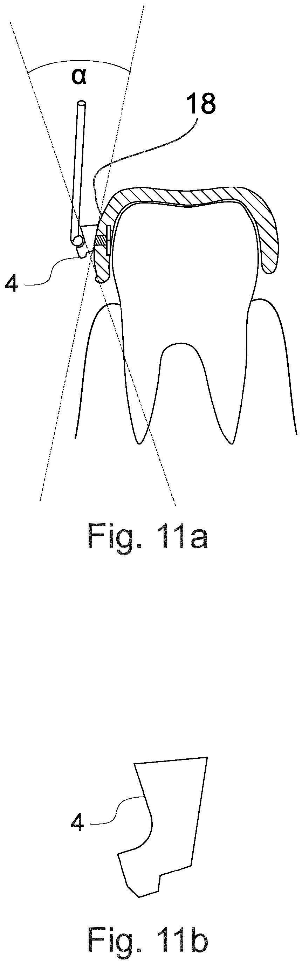

Fig. 11 shows an alternative embodiment without tilted pedestal structures on the aligner, retainer or positioner. Instead, the base unit 4, shown in better magnification in Fig 11B, defines an angle that sets its outer surface apart from the surrounding outer surface 18 of the buccal side of the aligner.

The said angle allows the upward/backward (when seem from the lower jaw) or downward/forward (when seen from then upper jaw) directed shaft or tube to avoid immediate contact with the surface of the teeth or the aligner, retainer or position, when the patient moves his lower jaw laterally.

**List of reference signs**

| | |
|---|---|
| 1 | tooth |
| 2 | aligner with tooth receiving cavities |
| 3 | tilted pedestal structure on aligner, retainer or positioner |
| 4 | base unit |
| 5 | screw |
| 6 | shaft/tube |
| 7 | joint |
| 8 | bracket |
| 9 | archwire |
| 10 | ball joint |
| 11 | slit |
| 12 | embedding wire |
| 13 | retainer type device |
| 14 | washer |
| 15 | canine |
| 16.1 | 1^{st} premolar |
| 16.2 | 2^{nd} premolar |
| 17.1 | 1^{st} molar |
| 17.2 | 2^{nd} molar |
| 17.3 | 3^{rd} molar |
| 18 | outer surface of buccal side of aligner, retainer or positioner |
| 19 | palatinal side of aligner, retainer or positioner |
| 20 | inner surface of buccal side of aligner, retainer or positioner |
| 21.1 | cavities of aligner, retainer or positioner to receive canines |
| 21.2 | cavities of aligner, retainer or positioner to receive premolars |
| 21.3 | cavities of aligner, retainer or positioner to receive molars |
| 22 | setup for producing an aligner, retainer or positioner |
| 23 | bore hole/internal thread |
| 24 | bore hole |
| 25 | tilted pedestal structure on setup for producing aligner, retainer or positioner |
| 26 | outer surface of buccal side of aligner, retainer or positioner |

## Claims

1. A coupling interface suitable for use with at least one pair of orthodontic aligners, retainers or positioners (2), comprising one upper jaw aligner, retainer or positioner, and one lower jaw aligner, retainer or positioner, said pair of aligners, retainers or positioners comprising a polymeric material and tooth receiving cavities to accommodate teeth arranged in the said upper and lower jaws,
said coupling interface comprising a set of at least two hinge units, each hinge unit comprising two joints (7), retainers or positioners, the two joints further being pivotally connected to the distally opposing sections of a tube or shaft (6),
wherein at least one of the joints (7) is detachably engaged with the respective aligner, retainer or positioner (2).

2. The coupling interface according to claim 1, wherein at least one of the joints comprises
c) a base unit (4) which is pivotally connected to the tube or shaft (6), which base unit is arranged at the outer surface (18) of the buccal side of one cavity (21) of the respective aligner, retainer or positioner, which cavity (21) is designed to receive a canine, premolar or molar of the respective jaw, which base unity (4) comprises a bore hole (23) or internal thread (23), and
d) a fixing device (5) arranged at the inner surface (20) of the buccal side of said cavity (21) of the respective aligner, retainer or positioner, said fixing device having an elongated shaft that interacts with the bore hole or internal thread of the base unit.

3. The coupling interface according to claim 1 or 2, which is a Herbst appliance.

4. The coupling interface according to any one of claims 1 - 3, wherein at least one base unit (4) is pivotally connected to the tube or shaft (6) by means of a ball joint (10).

5. An orthodontic aligner, retainer or positioner (2) for being arranged on teeth of a jaw, comprising cavities (21) which are designed to receive teeth of said jaw,
which aligner, retainer or positioner comprises, on the buccal side of at least one cavity designed to receive a canine, premolar or molar of the respective jaw,
a bore hole (24) suitable to let through a fixing device (5) having an elongated shaft.

6. The orthodontic aligner, retainer or positioner (2) according to claim 5, which further comprises a tilted pedestal structure (3) which defines a surface that is inclined with respect to the surrounding outer surface (18) of the buccal side of the aligner, retainer or positioner.

7. The orthodontic aligner, retainer or positioner according to any one of claims 5 - 6, which comprises a polymeric material, preferably a transparent material.

8. A pair of orthodontic aligners, retainers or positioners according to any one of claims 5 - 7, comprising one upper jaw aligner, retainer or positioner, and one lower jaw aligner, retainer or positioner, wherein
the bore hole (24) and/or the tilted pedestal structure (3) of the lower jaw aligner, retainer or positioner is arranged at the buccal side of a cavity which is designed to receive a canine (21.1) or premolar (21.2), and
the bore hole (24) and/or tilted pedestal structure of the upper jaw aligner, retainer or positioner is arranged at the buccal side of a cavity which is designed to receive a premolar (21.2) or molar (21.3).

9. A set of orthodontic aligners, which set consists of at least
• a first aligner according to any of one claims 5 - 7, or a pair of aligners according to claim 8, having a geometry selected to reposition the teeth of a patient's jaw from a first tooth arrangement to a second tooth arrangement, and
• a second aligner according to any of one claims 5 - 7or a pair of aligners according to claim 8, having a geometry selected to reposition the teeth of said patient's jaw from the second tooth arrangement to a third tooth arrangement,
• and, optionally, further aligners according to any of one claims 5 - 7, or a pair of aligners according to claim 8, having a geometry selected to reposition the teeth of said patient's jaw from the third tooth arrangement to fourth and even further tooth arrangements.

10. A Kit comprising at least
c) two coupling interfaces according to any of claims 1 - 4, and
d) (i) a pair of orthodontic aligners, retainers or positioners according to claim 8, or (ii) a set of aligners according to claim 9.

11. Use of a Kit according to claim 10 for the treatment of a patient suffering from an overbite and a malocclusion.

12. A setup (22) suitable for producing an orthodontic aligner, retainer or positioner (2) according to any one of claims 5 - 7, which setup comprises a positive model of at least a section of a dentition, comprising the model of a jaw with tooth models therein, said setup further having at least one tilted pedestal structure (25) on a model of a canine, premolar and/or molar, which tilted pedestal structure defines a surface that is inclined with respect to the surrounding outer surface (26) of the buccal side of the setup.

13. Use of a setup (22) according to claim 12 for the manufacture of an aligner, retainer or positioner according to any of claims 5 - 7.
